# DEMANDE DE BREVET EUROPEEN

(11) **EP 1 785 315 A1**
(43) Date de publication de la demande: **16.05.2007**
(21) Numéro de dépôt: 06301057.3
(22) Date de dépôt: 18.10.2006
(51) Int. Cl.: B60R 11/00

(54) **Véhicule comprenant un ouvrant et une pièce de carosserie.**

(30) Priorité: 15.11.2005 FR 0553459
(71) Demandeur: Peugeot Citroen Automobiles SA, 78943 Vélizy-Villacoublay Cedex (FR)
(72) Inventeur: Vuillemey, Christian, 70400, HERICOURT (FR)

(57) **Abrégé**

L'invention se rapporte à un véhicule comprenant un ouvrant (40) et une pièce de carrosserie (30) apte à s'étendre longitudinalement sous ledit ouvrant (40) lorsque ce dernier est en position fermée.

Selon l'invention, ladite pièce (30) comporte une cavité servant de zone de rangement (20).

## Description

L'invention se rapporte à un véhicule comprenant un ouvrant et une pièce de carrosserie apte à s'étendre longitudinalement sous ledit ouvrant lorsque ce dernier est en position fermée.

Selon une architecture classique, les véhicules automobiles comportent généralement un longeron disposé longitudinalement sous une porte latérale. De tels longerons forment un corps creux dont l'espace est jusqu'à présent inutilisé.

Un but de la présente invention est de pallier tout ou partie des inconvénients de l'art antérieur relevés ci-dessus.

A cette fin, le véhicule selon l'invention, par ailleurs conforme à la définition générique qu'en donne le préambule ci-dessus, est essentiellement caractérisé en ce que ladite pièce comporte une cavité servant de zone de rangement.

Par ailleurs, l'invention peut comporter l'une ou plusieurs des caractéristiques suivantes :
- la zone de rangement est délimitée par des parois formant un espace clos,
- l'une des parois sert de couvercle d'accès à ladite zone de rangement,
- la paroi servant de couvercle appartient à la pièce de carrosserie,
- la paroi servant de couvercle est accessible lorsque l'ouvrant est ouvert.

L'invention concerne également un véhicule dont l'ouvrant est une porte latérale et dont la pièce de carrosserie est un longeron formant un corps creux.

L'invention concerne également un véhicule dont l'ouvrant est un hayon et dont la pièce de carrosserie est une traverse formant un corps creux.

D'autres particularités et avantages apparaîtront à la lecture de la description ci-après faite en référence aux figures dans lesquelles :
- la figure 1 représente une vue latérale d'un véhicule automobile,
- la figure 2 représente une vue en coupe selon le plan A-A de la figure 1.

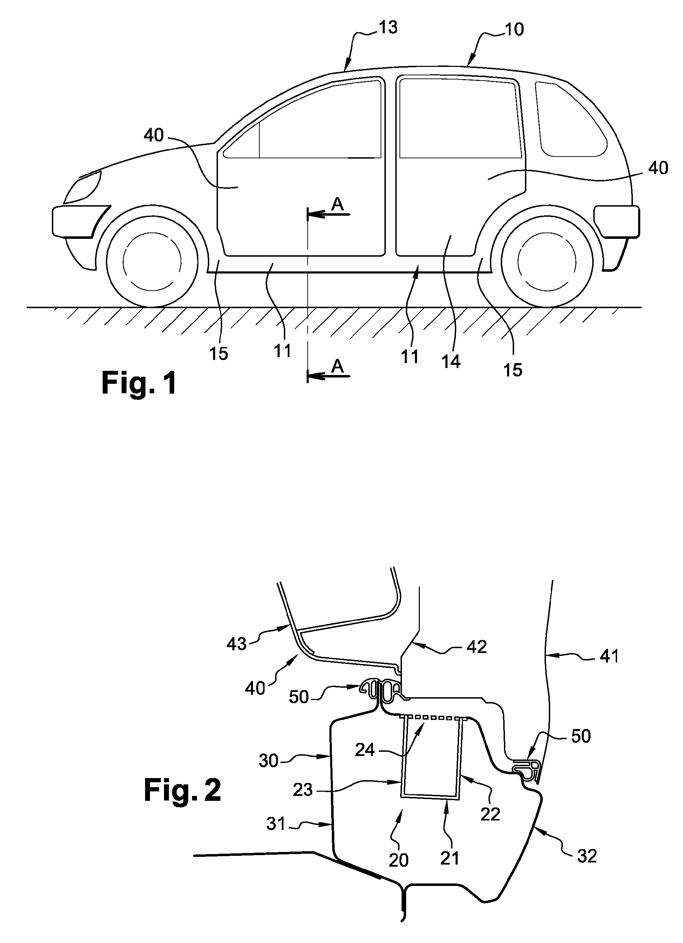

La figure 1 représente une carrosserie de véhicule 10 comprenant, entre autres, un pavillon 13 et un plancher (non représenté) reliés entre eux par des parois latérales 14. Dans l'exemple représenté à la figure 1, chaque paroi latérale possède deux encadrements 15 destinés à recevoir chacun une porte 40 de véhicule.

Chaque porte 40 comprend un panneau extérieur 41, orienté vers l'extérieur du véhicule, monté serti sur les bords d'une doublure 42, orientée vers l'intérieur du véhicule. Une garniture 43 recouvre la doublure 42 afin d'assurer à la porte un aspect esthétique. La porte 40 est montée verticalement pivotante, dans l'encadrement 15 de la porte au moyen de charnières (non représentées), entre une position d'ouverture et une position de fermeture. Les figures 1 et 2 présentent la porte 40 en position fermée.

Le tronçon inférieur 11 de l'encadrement 15 est constitué d'un longeron 30 formé par deux profilés 31, 32 en forme de U ; les deux profilés 31, 32 sont assemblés de façon classique de façon à ce que le longeron 30 forme un corps creux. Le tronçon inférieur 11 appartient à la zone appelée communément « seuil de porte » ou « bas de marche ». Ainsi, lorsque la porte est en position fermée, le longeron 30 s'étend longitudinalement sous la porte 40. Bien sûr, les pièces profilées utilisées pour former le longeron 30 peuvent être remplacées par des pièces embouties.

On notera que des moyens d'étanchéité désignés par la référence générale 50 sont prévus entre la porte 40 et le longeron 30.

Selon l'invention, le longeron 30, placé sous la porte située à proximité du conducteur, possède une zone de rangement 20 délimitée par quatre parois 21, 22, 23, 24 (voir figure 2). La zone de rangement 20 possède ainsi une forme parallélépipèdique. Les quatre parois 21, 22, 23, 24 délimitent un espace clos. La zone de rangement 20 est située à l'aplomb de l'ouvrant 40 lorsque ce denier est en position fermée.

La paroi 24 de la zone de rangement 20 appartient au profilé 32 formant le longeron 30; cette paroi 24 sert également de couvercle d'accès à la zone de rangement 20. Dans l'exemple représenté à la figure 2, la paroi 24 se situe en vis en vis de la partie basse de la doublure 42 de la porte. La paroi 24 est montée pivotante au moyen de charnières (non représentées), entre une position d'ouverture et une position de fermeture.

Selon l'invention, la zone de rangement 20 est accessible seulement lorsque la porte 40 est ouverte ; en effet lorsque la porte est en position fermée, la paroi 24 servant de couvercle est inaccessible et ne peut donc pas être manoeuvrée.

Ainsi, la zone de rangement 20 de l'invention offre un espace sécurisé de rangement inaccessible lorsque la porte 40 est en position fermée et verrouillée. Cette zone de rangement 20 présente notamment un avantage pour les véhicules découvrables, qui ne possèdent que des rangements (vide-poches, boîte à gants...) facilement accessibles aux personnes mal intentionnées, et pour les véhicules non découvrables,qui ont été verrouillés fenêtre ouverte.

Bien évidemment la zone de rangement de l'invention peut posséder toute autre forme appropriée.

Dans le cas décrit ci-dessus, la zone de rangement 20 se situe à proximité du siège du conducteur. Ainsi, dès l'ouverture de la porte, ce dernier peut facilement accéder à cette zone où peuvent se trouver ses effets personnels mais aussi un triangle de signalisation...

Les parois de la zone de rangement présentent à l'intérieur du longeron peuvent également permettre de renforcer et/ou de rigidifier ce dernier; les parois peuvent notamment posséder une section et/ou être réalisées en une matière permettant de parvenir à un tel résultat.

Plusieurs zones de rangements, peuvent bien évidemment être disposées pour un même véhicule à l'aplomb d'une ou plusieurs porte(s) latérale(s). Une zone de rangement peut également être aménagée dans la traverse placée à l'aplomb du hayon. La pièce de carrosserie possédant le rangement peut également être disposée à l'aplomb d'un couvercle de coffre ou d'un hobby.

Selon une autre variante, la zone de rangement peut être dépourvue de la paroi servant de couvercle ; dès que la porte est ouverte, la zone est alors directement accessible.

## Revendications

1. Véhicule comprenant un ouvrant (40) et une pièce de carrosserie (30) apte à s'étendre longitudinalement sous ledit ouvrant (40) lorsque ce dernier est en position fermée et comportant une cavité servant de zone de rangement (20), **caractérisé en ce que** ladite zone de rangement (20) est délimitée par des parois (21, 22, 23, 24) formant un espace clos.

2. Véhicule selon la revendication 1, **caractérisé en ce que** l'une des parois (24) sert de couvercle d'accès à ladite zone de rangement (20).

3. Véhicule selon la revendication 2, **caractérisé en ce que** ladite paroi servant de couvercle (24) appartient à la pièce de carrosserie (30).

4. Véhicule selon la revendication 2 ou 3, **caractérisé en ce que** ladite paroi servant de couvercle (24) est accessible lorsque l'ouvrant est ouvert.

5. Véhicule selon l'une quelconque des revendications précédentes, **caractérisé en ce que** ledit ouvrant est une porte latérale (40), et **en ce que** ladite pièce de carrosserie est un longeron (30) formant un corps creux.

6. Véhicule selon l'une quelconque des revendications 1 à 4, **caractérisé en ce que** ledit ouvrant est un hayon, et **en ce que** ladite pièce de carrosserie est une traverse formant un corps creux.
